(19) Europäisches Patentamt
European Patent Office
Office européen des brevets

(11) **EP 1 355 211 B1**

(12) **EUROPÄISCHE PATENTSCHRIFT**

(45) Veröffentlichungstag und Bekanntmachung des
Hinweises auf die Patenterteilung:
**03.06.2009 Patentblatt 2009/23**

(51) Int Cl.:
*G05D 19/02* (2006.01)    *B41F 13/004* (2006.01)
*F16F 15/02* (2006.01)    *B41F 13/08* (2006.01)

(21) Anmeldenummer: **03006211.1**

(22) Anmeldetag: **20.03.2003**

(54) **Kompensation von Zylinderschwingungen in bedruckstoffverarbeitenden Maschinen**

Compensating vibrations of cylinders in machines processing printed web material

Compensation de vibrations de cylindres dans des machines de traitement de matériau de bande imprimée

(84) Benannte Vertragsstaaten:
**AT BE BG CH CY CZ DE DK EE ES FI FR GB GR HU IE IT LI LU MC NL PT RO SE SI SK TR**

(30) Priorität: **17.04.2002 DE 10217707**

(43) Veröffentlichungstag der Anmeldung:
**22.10.2003 Patentblatt 2003/43**

(73) Patentinhaber: **Heidelberger Druckmaschinen Aktiengesellschaft**
**69115 Heidelberg (DE)**

(72) Erfinder:
• **Mutschler, Peter, Prof. Dr. Ing.**
  **69517 Gorxheimertal (DE)**
• **Nöll, Matthias**
  **64331 Weiterstadt (DE)**

(56) Entgegenhaltungen:
EP-A- 0 469 617      EP-A- 0 882 588
EP-A- 1 040 917      EP-A- 1 202 147
DE-A- 4 322 744      DE-A- 19 740 153
US-A- 5 369 348

**Beschreibung**

Die Erfindung betrifft eine Kompensationseinrichtung für Schwingungen einer Winkelgröße in einer bedruckstoffverarbeitenden Maschine, mit einem zugeordneten auf die Winkelgröße einwirkenden Aktuator, wobei der Kompensationseinrichtung ein für den Winkelgrößenverlauf repräsentatives Signal zugeführt wird und die Kompensationseinrichtung ein Ausgangssignal für den Aktuator erzeugt.

Periodische nichtganzzahlige Ordnungen von Schwingungen im Vergleich zur Maschinenfrequenz in einer Winkelgröße, in einem Drehwinkel oder in einem Winkelsignal eines Zylinders in einer bedruckstoffverarbeitenden Maschine, insbesondere einer bogen- oder bahnverarbeitenden Druckmaschine, beeinträchtigen die Genauigkeit aufeinanderfolgend gedruckter Sujets auf einem Bedruckstoff. Diese Beeinträchtigungen können zu Druckproblemen, insbesondere zum sogenannten Dublieren führen. Besonders zwischen mechanisch entkoppelten Teilen einer bedruckstoffverarbeitenden Maschine, insbesondere zweier oder mehrerer Druckwerksgruppen einer bogenverarbeitenden Druckmaschine, können derartige Beeinträchtigungen relevant werden: Aus den Schwingungen resultierende Schwankungen der Drehwinkeldifferenzen an den Umfängen eines ersten und eines zweiten Zylinders führen direkt bei der Bogenübergabe zu einem korrespondierenden Anstieg des Umfangspassers zum Bogenübergabewinkel zwischen den getrennten beteiligten Druckwerken.

Für eine mit einzelnen Elektromotoren angetriebene Druckmaschine ist beispielsweise im Dokument DE 197 40 153 A1 eine Regelung mittels Regelkreisen für jeden Elektromotor offenbart, durch welche periodische Schwingungen kompensiert werden. In diesem periodischen Kompensationsregler wird ein einem Stellglied zugehenden Momentsollwert ein weiteres Moment aufgeschaltet, das ein die Soll-Istwertdifferenz verarbeitender Kompensationsregler bestimmt oder aus dem Momentsollwert und dem Istwert der Winkelgeschwindigkeit oder des Drehwinkels ermittelt wird. Bei dieser Vorgehensweise ist zur Sicherstellung der Stabilität ein dynamisches Prozessmodel erforderlich. Auch ist die Regelung mit einem hohen Rechenaufwand verbunden. Hinzu kommt, dass die Abtastzeit so lang gewählt werden muss, dass ein Vielfaches der Periodendauer der zu kompensierenden Schwingungen aufgenommen werden kann, was bei variabler Druckmaschinengeschwindigkeit problematisch ist.

Im Dokument EP 0 882 588 A1 ist eine Registerregelung für eine Rollenrotationsdruckmaschine beschrieben. Einem Motorregler wird eine Störgröße, beispielsweise eine Zylinderumfanggeschwindigkeit, aufgeschaltet, welche größeren Registerabweichungen entgegenwirkt, die ohne eine derartige Aufschaltung auftreten würden. Die Umfangsgeschwindigkeit wird gemessen. Daraus bildet ein Steuerglied anhand einer gespeicherten, geschwindigkeitsabhängigen Kennlinie einen aufzuschaltenden Störgrößenanteil.

Aus dem Dokument EP 0 469 617 A1 ist eine Motorregelung mit einem adaptiven Filter bekannt, wobei die Differenz eines Betriebssignals und eines Referenzsignals zur Kontrolle eines Lastbetriebes genutzt wird. Eine aufgrund von Lastfluktuation, Maschinenvariation oder Betriebsbedingungsänderung im Betriebssignal auftretende Resonanz wird mittels eines adaptiven Filters unterdrückt, wobei ein Filterkoeffizient einstellbar ist.

Im Dokument US 5,369,348 ist eine Vorrichtung zur Dämpfung periodischer Schwingungen einer mechanischen Struktur beschrieben. Auftretende Schwingungen werden detektiert und die Periodizität dieser Schwingungen wird bestimmt, so dass eine Kompensationsschwingung in einer Steuerungseinrichtung generiert und der mechanischen Struktur aufgeschaltet werden kann. Die Steuerungseinrichtung enthält einen synchronisierenden Filter, der ein gefiltertes Signal mit der instantanen Fundamentalfrequenz und mit Harmonischen dieser Fundamentalfrequenz des detektierten Signals erzeugt. Konkret besteht der synchronisierende Filter aus Bandpass-Filtern.

Im Dokument EP-A-1 202 147, nach veröffentlicht am 02.05.2002, entspricht DE 101 49 525 A1, wird ein Verfahren zur Kompensation von mechanischen Schwingungen, insbesondere Drehschwingungen, an einer Maschinenwelle, einem Zylinder oder einem aus einem oder mehreren Koordinatenwerten einer oder mehrerer Drehachsen errechneten Signals, insbesondere der Differenz zwischen Koordinaten zweier reeller Maschinenwellen, offenbart. Die Drehschwingungen werden in diskreten Frequenzanteilen spektral dargestellt, und jeder Anteil wird durch ein im wesentlichen harmonisches Moment gleicher Frequenz mit bestimmter Amplitude und Phase kompensiert, indem das harmonische Moment auf die Maschinenwelle direkt oder indirekt mittels eines Aktuators aufgeprägt wird. Das angegebene Verfahren benötigt die Kenntnis der Verstärkungen und der Phasenverschiebungen des zugrundeliegenden Prozesses für die zu kompensierenden Frequenzen, um harmonische Momente angemessener Stärken und Phasen einbringen zu können.

Aufgabe der vorliegenden Erfindung ist es, unerwünschte Schwingungen eines Zylinders oder mehrerer Zylinder in bedruckstoffverarbeitenden Maschinen, insbesondere Druckmaschinen, zu verringern oder zu eliminieren.

Diese Aufgabe wird erfindungsgemäß durch eine Kompensationseinrichtung mit den Merkmalen gemäß Anspruch 1 und ein Verfahren gemäß Anspruch 16 gelöst. Vorteilhafte Weiterbildungen der Erfindung sind in den abhängigen Ansprüchen charakterisiert.

Eine erfindungsgemäße Kompensationseinrichtung für Schwingungen einer Winkelgröße in einer bedruckstoffverarbeitenden Maschine, umfasst einen zugeordneten, auf die Winkel größe einwirkenden Aktuator, wobei der Kompensationseinrichtung ein für den Winkelgrößenverlauf repräsentatives Signal zugeführt wird und die Kompensationseinrichtung ein Ausgangssignal für den Aktuator erzeugt. Erfindungsgemäß weist die Kompensationseinrichtung für Schwingungen einer Winkelgröße in einer bedruckstoffverarbeitenden Maschine, mit einem zugeordneten, bevorzugt der Kompensationseinrichtung nachgeordneten, auf die Winkelgröße einwirkenden Aktuator, wenigstens ein Filter in Form einer Übertragungsfunktion oder einer Summe von Übertragungsfunktionen, deren Frequenzparameter den zu kompensierenden Schwingungsfrequenzen entsprechen, auf, durch deren Wirkung das Ausgangssignal der Kompensationseinrichtung für den Aktuator an wenigstens einer der zu kompensierenden diskreten Frequenz aus dem der Kompensationseinrichtung zugeführten, für den Winkelgrößenverlauf, genauer für den zeitlichen Verlauf oder die zeitliche Veränderung des Wertes der Winkelgröße, repräsentativen Signal gewonnen wird. Die Winkelgröße kann ein Drehwinkel eines Zylinders oder eine Drehwinkeldifferenz eines ersten und eines zweiten Zylinders sein.

Im allgemeinen sind die auftretenden Schwingungen in dem Sinne diskret darstellbar, wie sie durch eine Superposition aus Schwingungen mit diskreten Frequenzen gebildet werden. Mit hinreichender Präzision sind die auftretenden Schwingungen durch eine endliche Anzahl von Schwingungen darstellbar. Es ist bekannt, dass die auftretenden Schwingungen vom Betriebszustand der bedruckstoffverarbeitenden Maschine abhängig sind. Ein Parameter mit besonders starkem Einfluss ist hierbei die Druckgeschwindigkeit.

Die für die erfindungsgemäße Kompensationseinrichtung notwendigen Frequenzparameter sind entweder voreingestellt oder sind während des Betriebes der bedruckstoffverarbeitenden Maschine einstellbar oder veränderbar. Eine Einstellung kann beispielsweise auf der Grundlage des Betriebszustandes erfolgen, wie er in der Maschinensteuerung abgebildet ist. Die Maschinensteuerung kann in Wirkverbindung mit der erfindungsgemäßen Kompensationseinrichtung stehen und die Frequenzparameter beeinflussen oder verändern. Insbesondere können die Frequenzparameter geschwindigkeitsabhängig sein.

Die erfindungsgemäße Kompensationseinrichtung kann in vorteilhafter und einfacher Weise zur Kompensation ganzzahliger oder nichtganzzahliger Ordnungen von Schwingungen bezogen auf die Maschinenfrequenz eingesetzt werden. Es ist für die Kompensationseinrichtung keine genaue Kenntnis der Prozessparameter erforderlich. Deshalb kann auch bei einer stark schwankenden Prozessen (Prozessparametern, Prozessübertragungsfunktionen) Stabilität erreicht werden. Um Stabilität sicherzustellen, ist nur die Kenntnis des Stabilitätsbereichs der Prozessparameter erforderlich. Eine Ausführungsform der Kompensationseinrichtung umfasst mit wenig Rechenaufwand ein Filter zweiter Ordnung. Die Kompensationseinrichtung kann insbesondere vorteilhaft zur Kompensation von Schwingungen eingesetzt werden, deren Energie verglichen mit der Energie einer Rotationsbewegung der Winkelgröße klein ist.

Erfindungsgemäß wird in einem Kompensationsverfahren für Schwingungen einer Winkelgröße in einer bedruckstoffverarbeitenden Maschine, auf die Winkelgröße mit einem Aktuator derart eingewirkt, dass Schwingungen der Winkelgröße verringert werden, wobei ein für den Winkelgrößenverlauf repräsentatives Signal bestimmt und der Kompensationseinrichtung zur Erzeugung eines Ausgangssignals für den Aktuator zugeführt wird. Das Ausgangssignal der Kompensationseinrichtung wird durch Wirkung wenigstens eines Filters in Form einer Übertragungsfunktion oder einer Summe von Übertragungsfunktionen, deren Frequenzparameter den zu kompensierenden Schwingungsfrequenzen entspricht, an wenigstens einer der zu kompensierenden diskreten Frequenzen aus dem Signal gewonnen.

In der erfindungsgemäßen Kompensationseinrichtung ist die Übertragungsfunktion für jede der zu kompensierenden Frequenzen harmonisch, also eine Sinus- oder Cosinus- oder entsprechende phasenverschobene Funktion. Die Übertragungsfunktionen werden jeweils im Laplace-Bereich (S-Bereich, für kontinuierliche Signale) oder Z-Bereich dargestellt. Mathematische Grundeigenschaften der Laplace-Transformation und der Z-Transformation sind beispielsweise im "Taschenbuch der Mathematik" von I. N. Bronstein und K. A. Semendjajew, 24. Auflage, Harri Deutsch, Thun und Frankfurt am Main, Deutschland, 1989, zusammengestellt.

Das repräsentative Signal für den Winkelgrößenverlauf kann eine Zeitreihe, eine durch an Zeitpunkten festgestellte oder abgetastete Signalfolge, sein. In anderen Worten ausgedrückt, das repräsentative Signal kann aus einer (bevorzugt zeitgeordneten) Reihe von Messwerten der Winkelgröße zu verschiedenen Zeitpunkten bestehen. Der aktuelle Winkelgrößenverlauf kann an diskreten Stützstellen bekannt sein. Alternativ dazu kann auch ein kontinuierliches repräsentatives Signal erzeugbar sein. Ein repräsentatives Signal kann von einem Winkellagegeber erzeugt werden. Es kann direkt oder indirekt, das heißt, unverarbeitet beziehungsweise unmodifiziert oder verarbeitet und modifiziert der Kompensationseinrichtung zugeführt werden. Eine Verarbeitung (Modifikation) kann beispielsweise notwendig sein, um systematische Fehler der Messung auszugleichen (Kalibration). Die Abtastzeit kann beim erfindungsgemäßen Vorgehen von der Periodendauer der zu kompensierenden Schwingung unabhängig sein und ist bevorzugt unabhängig.

Die Kompensationseinrichtung umfasst in einer vorteilhaften Ausführungsform eine Recheneinrichtung, in welcher ein Programm abläuft, das wenigstens einen Abschnitt aufweist, in welchem das Ausgangssignal aus dem repräsentativen Signal unter Wirkung der Übertragungsfunktion auf das repräsentative Signal gewonnen wird. Anders ausgedrückt, die Übertragungsfunktion kann in einem Speicher hinterlegt sein und ein Programm weist Schritte gemäß einer Rechenvorschrift auf, wie durch Umformungen das Ausgangssignal aus dem repräsentativen Signal gewonnen wird. Insbesondere die Berechnung des Ausgangssignals als eine der Übertragungsfunktion entsprechende Differenzengleichung aus Werten des Eingangssignals zu einem oder zu mehreren Zeitpunkten und optional aus Werten des Ausgangssignals zu einem oder zu mehreren vorhergehenden Zeitpunkten ist vorgesehen.

In einer Weiterbildung der Erfindung ist zur Sicherstellung der Stabilität in der Kompensationseinrichtung wenigstens ein lineares Phasenverschiebungselement dem Filter vorgeordnet oder nachgeordnet. Filter und Phasenverschiebungselement können auch integriert sein. Anders gesagt, das Phasenverschiebungselement kann auch im Filter enthalten sein. Das Phasenverschiebungselement kann auf eine diskrete Frequenz, auf mehrere diskrete Frequenzen oder auf ein Kontinuum von Frequenzen wirken. Anders ausgedrückt, für jede zu kompensierende Frequenz kann ein Phasenverschiebungselement vorgesehen sein oder ein Phasenverschiebungselement wirkt auf wenigstens eine Anzahl der zu kompensierenden Frequenzen.

Alternativ zur Verwendung eines Phasenverschiebungselements kann die Stabilität der Kompensation auch durch die Wahl der Phase der harmonischen Übertragungsfunktion sichergestellt werden.

Die erfindungsgemäße Kompensationseinrichtung für Schwingungen einer Winkelgröße kann in einer Regelungsvorrichtung für diese Winkelgröße in einer bedruckstoffverarbeitenden Maschine, mit einem Winkelgrößengeber, einem Regelelement, einem auf die Winkelgröße einwirkenden Aktuator, dem Regelelement derart zugeordnet sein, dass das Ausgangssignal der Kompensationseinrichtung dem Ausgangsignal des Regelelements überlagert wird. Dabei kann in der erfindungsgemäßen Regelungsvorrichtung das repräsentative Signal den Wert der Winkelgröße oder den Wert der Winkelgrößenänderung oder den Wert der Winkelgrößenbeschleunigung darstellen. Bevorzugt weist das Regelelement einen Eingang für Istwerte des repräsentativen Signals der Winkelgröße und einen Eingang für Sollwerte des repräsentativen Signals der Winkelgröße auf.

Anders ausgedrückt, ein erfindungsgemäßes Regelungsverfahren für eine Winkelgröße in einer bedruckstoffverarbeitenden Maschine durch Einwirkung auf die Winkelgröße mit einem Aktuator derart, dass Differenzen zwischen Istwerten und Sollwerten der Winkelgröße verringert werden, umfasst eine Kompensation für Schwingungen der Winkelgröße mit einem erfindungsgemäßen Kompensationsverfahren.

Im Zusammenhang mit der erfindungsgemäßen Kompensationseinrichtung und der erfindungsgemäßen Regelungsvorrichtung steht auch ein erfindungsgemäßes Druckwerk in einer bedruckstoffverarbeitenden Maschine mit wenigstens einem Zylinder. Es zeichnet sich durch eine erfindungsgemäße Kompensationseinrichtung und/oder eine erfindungsgemäße Regelungsvorrichtung, welche dem Zylinder zugeordnet ist, aus. Alternativ dazu kann ein erfindungsgemäßes Druckwerk in einer bedruckstoffverarbeitenden Maschine mit wenigstens einem ersten Zylinder und einem zweiten Zylinder, eine erfindungsgemäße Kompensationseinrichtung und/oder eine erfindungsgemäße Regelungsvorrichtung, welche dem ersten Zylinder und dem zweiten Zylinder zugeordnet ist, aufweisen.

Eine Druckwerksgruppe umfasst eine Anzahl von Druckwerken. Bevorzugt sind die Druckwerke einer Druckwerksgruppe benachbart zueinander. Anders ausgedrückt, der Bedruckstoff geht von einem Druckwerk auf das andere Druckwerk entlang seines Transportweges durch die Druckmaschine über. Eine erfindungsgemäße Druckwerkgruppe in einer bedruckstoffverarbeitenden Maschine mit wenigstens einem ersten Zylinder in einem ersten Druckwerk und einem zweiten Zylinder in einem zweiten Druckwerk, umfasst eine erfindungsgemäße Kompensationseinrichtung und/ oder eine erfindungsgemäße Regelungsvorrichtung, welche dem ersten Zylinder und dem zweiten Zylinder zugeordnet ist.

Durch die Reduktion der Schwingungen kann insbesondere eine verbesserte Synchronisation des ersten und des zweiten Zylinders erreicht werden. Dieses ist in einer bogenverarbeitenden Druckmaschine besonders vorteilhaft für die Bogenübergabe zwischen zwei mechanisch entkoppelten Zylindern zweier Druckwerke, zweier Druckwerke in einer Druckwerksgruppe oder zweier Druckwerksgruppen.

Die erfindungsgemäße Kompensationseinrichtung oder die erfindungsgemäße Regelungsvorrichtung kann in einer Druckmaschine mit durchgehendem Räderzug oder in einer Druckmaschine mit getrenntem Räderzug eingesetzt werden. Anders ausgedrückt, in einer Druckmaschine können Trennstellen zwischen Druckwerken oder Druckwerksgruppen existieren, wobei die Antriebe der Druckwerke oder Druckwerksgruppen voneinander getrennt sind. Die Druckwerke oder Druckwerksgruppen einzeln betrachtet können über einen oder mehrere Antriebe verfügen.

Eine erfindungsgemäße Druckmaschine weist wenigstens ein erfindungsgemäßes Druckwerk und/oder eine erfindungsgemäße Druckwerksgruppe auf. Des weiteren alternativ dazu kann eine erfindungsgemäße Druckmaschine mit einer oder mehreren Trennstellen, welche jeweils Grenzen zwischen Druckwerken oder Druckwerksgruppen bilden und über welche der Bedruckstoff zwischen nicht mechanisch genau synchronisierten Zylindern übergeben wird, mit pro Trennstelle jeweils einem ersten Zylinder und einem zweiten Zylinder, zwischen denen die Trennstelle liegt, eine erfindungsgemäße Kompensationseinrichtung und/oder eine erfindungsgemäße Regelungsvorrichtung, welche dem ersten Zylinder und dem zweiten Zylinder zugeordnet ist, aufweisen.

Anders ausgedrückt, eine erfindungsgemäße Druckmaschine mit wenigstens einem ersten Zylinder und einem zweiten Zylinder, welcher vom ersten Zylinder mechanisch entkoppelt ist, zeichnet sich durch eine erfindungsgemäße Kompensationseinrichtung, welche dem ersten Zylinder und dem zweiten Zylinder zugeordnet ist, und/oder eine erfindungsgemäße Regelungsvorrichtung aus, welche dem ersten Zylinder und dem zweiten Zylinder zugeordnet ist. Eine erfindungsgemäße Druckmaschine mit wenigstens einem ersten Zylinder kann sich durch eine erfindungsgemäße Kompensationseinrichtung, welche dem ersten Zylinder zugeordnet ist, und/oder eine erfindungsgemäße Regelungsvorrichtung, welche dem ersten Zylinder zugeordnet ist, auszeichnen.

Die Druckmaschine kann eine bahnverarbeitende (rollenverarbeitende) oder bogenverarbeitende Maschine sein. Die Maschine kann mittels verschiedener Verfahren drucken: Insbesondere kann es sich bei den Druckverfahren um einen direkten oder indirekten Flachdruck, Offsetdruck, Flexodruck oder dergleichen handeln. Typische Bedruckstoffe sind Papier, Pappe, Karton, organische Polymerfolie oder dergleichen.

Weitere Vorteile und vorteilhafte Ausführungsformen und Weiterbildungen der Erfindung werden anhand der nachfolgenden Figuren sowie deren Beschreibungen dargestellt. Es zeigt im Einzelnen:

Figur 1      eine schematische Darstellung des Aufbaus einer erfindungsgemäßen Kompensationseinrichtung,

Figur 2      eine schematische Darstellung einer vorteilhaften Weiterbildung des Aufbaus einer erfindungsgemäßen Kompensationseinrichtung,

Figur 3      einen Ausschnitt einer bedruckstoffverarbeitenden Maschine mit getrenntem Räderzug, zweier Regelungsvorrichtungen und einer erfindungsgemäßen Schwingungskompensation,

Figur 4      einen Ausschnitt einer Ausführungsform einer bedruckstoffverarbeitenden Maschine mit getrenntem Räderzug, zwei Regelungsvorrichtungen und zwei erfindungsgemäßen Schwingungskompensationen,

Figur 5      einen Ausschnitt einer alternativen Ausführungsform einer bedruckstoffverarbeitenden Maschine mit getrenntem Räderzug, zwei Regelungsvorrichtungen und zwei erfindungsgemäßen Schwingungskompensationen,

Figur 6      einen Ausschnitt einer alternativen Ausführungsform einer bedruckstoffverarbeitenden Maschine mit einer Regelungsvorrichtung und einer erfindungsgemäßen Schwingungskompensation für einen Zylinder,

Figur 7      einen Ausschnitt einer Ausführungsform einer bedruckstoffverarbeitenden Maschine, die zwei Zylinder aufweist, denen jeweils eine Regelungsvorrichtung und eine erfindungsgemäße Schwingungskompensation zugeordnet ist,

Figur 8      eine Ausführungsform einer Regelungsvorrichtung mit einer erfindungsgemäßen Schwingungskompensation für einen Zylinder einer Rollendruckmaschine,

Figur 9      einen Ausschnitt einer weiteren alternativen Ausführungsform einer bedruckstoffverarbeitenden Maschine mit einer Regelungsvorrichtung und einer erfindungsgemäßen Schwingungskompensation, und

Figur 10     eine andere weitere Ausführungsform einer bedruckstoffverarbeitenden Maschine mit einer Regelungsvorrichtung und einer erfindungsgemäßen Schwingungskompensation.

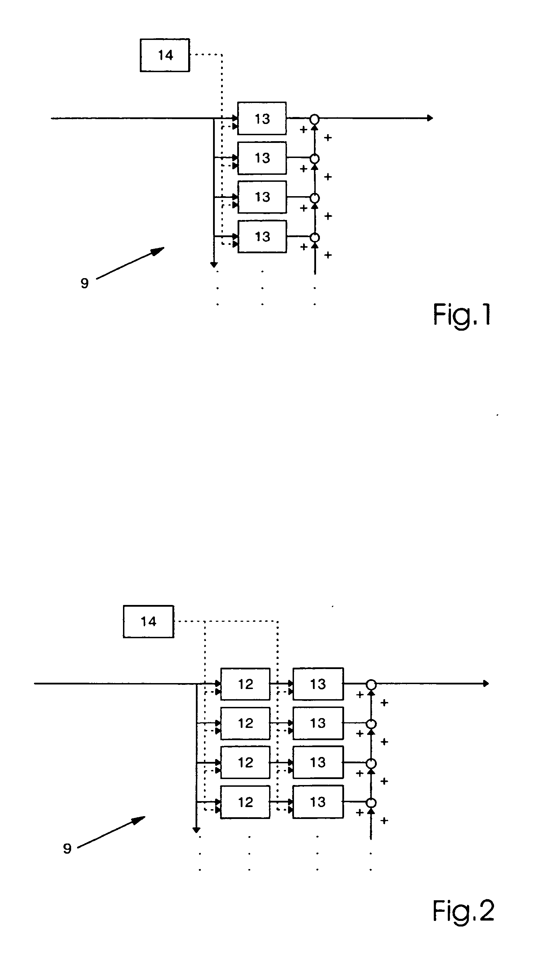

Die Figur 1 zeigt eine schematische Darstellung des Aufbaus einer erfindungsgemäßen Kompensationseinrichtung. Bevor diese einfache Ausführungsform beschrieben wird, sind ein paar grundsätzliche Anmerkungen zu machen.

In der erfindungsgemäßen Kompensationseinrichtung wird auf ein Signal eingewirkt. Die Kompensationseinrichtung enthält erfindungsgemäß eine harmonische Übertragungsfunktion, deren Kreisfrequenz der zu kompensierenden Kreisfrequenz $\omega_n$ entspricht. Die harmonische Übertragungsfunktion kann eine Cosinus-Übertragungsfunktion oder eine Sinus-Übertragungsfunktion oder eine gewichtete Summe einer Cosinus- und einer Sinus-Übertragungsfunktion sein. Ohne Einschränkung auf eine spezielle der allgemeinen Übertragungsfunktionen sei zunächst zum Zweck der Anschaulichkeit eine Cosinus-Übertragungsfunktion betrachtet. Im Laplace-Bereich lautet die Cosinus-Übertragungsfunktion der Kompensationseinrichtung :

$$G_{Rn}(s) = k_n \frac{s}{s^2 + \omega_n^2} \tag{1}$$

mit zwei grenzstabilen Polen $S_{1/2} = \pm i \cdot \omega_n$ an der zu kompensierenden Kreisfrequenz $\omega_n$ und basiert somit auf einem internen Störungsmodell (i ist die imaginäre Einheit). Eine genaue Prozesskenntnis ist somit nicht erforderlich. Als Prozess wird hierbei die Übertragungsfunktion vom Ausgang der Kompensationseinrichtung 9 bis zum Eingang der Kompensationseinrichtung 9 bezeichnet. In typischen geeigneten Auslegungen wird eine Phasenverschiebung von -90˚

erst bei Kreisfrequenzen größer als 100s$^{-1}$ erreicht. Nach dem Prinzip des internen Störmodells (Internal Model Principle) wird eine sinusförmige Störung dann vollständig eliminiert - anders ausgedrückt, einem Sollwert 0 angeglichen -, wenn ein Modell der Störung in der Kompensationseinrichtung enthalten und der geschlossene Kompensationskreis stabil ist. Für abgetastete Systeme mit Abtastzeit T lautet die Cosinus-Übertragungsfunktion im Z-Bereich

$$G_{Rn}(z^{-1}) = k_n \frac{1 - b_n z^{-1}}{1 - 2b_n z^{-1} + z^{-2}} \qquad (2)$$

mit

$$b_n = \cos(\omega_n T). \qquad (3)$$

Dabei ist in Gleichung (2) ein Halteglied nicht mitmodelliert. Für jeden Abtastschritt k kann die Ausgangsgröße der Kompensationseinrichtung y(k) aus der Eingangsgröße u(k) der Zeitschritte k und k-1 und aus der Ausgangsgröße y(k) der Zeitschritte k-1 und k-2 nach der Berechnungsvorschrift

$$y(k) = k_n(u(k) - b_n u(k-1)) + 2b_n y(k-1) - y(k-2) \qquad (4)$$

bestimmt werden. In diesem Zusammenhang wird klar, dass die Ordnung der zu kompensierenden Kreisfrequenz ganzzahlig oder nichtganzzahlig sein kann. Für die Kompensation einer geschwindigkeitsunabhängigen Maschinenordnung r lautet die zugehörige Kreisfrequenz

$$\omega_n = 2\pi \cdot r \cdot v / 3600, \qquad (5)$$

dabei geben v die mittlere Maschinengeschwindigkeit in Druck pro Stunde und die Ordnung das Verhältnis der zu kompensierenden Schwingungsfrequenz zur Druckfrequenz der Maschine an. Typischerweise weist eine bedruckstoffverarbeitende Maschine einen Regler auf, welcher die mittlere Maschinengeschwindigkeit als Sollgeschwindigkeit hat. Zur Kompensation fester Ordnungen r muss bei einer Änderung der mittleren Maschinengeschwindigkeit beziehungsweise Sollgeschwindigkeit der Parameter $b_n$ gemäß Gleichung (3) in den Gleichungen (1), (2) bzw. (4) neu berechnet werden. Die Kompensationseinrichtung erreicht eine Elimination der sinusförmigen Störung ohne eine aufwendige Berechnung trigonometrischer Funktionen und ist deshalb im Zusammenhang mit einfachen Regelungsrechnern einsetzbar. Unter Verwendung einer harmonischen Übertragungsfunktion mit fester Phase, wie beispielsweise der Cosinus- oder der Sinus-Übertragungsfunktion, gilt Stabilität bei kleinen Verstärkungsfaktoren in einem 180˚ großen Bereich der Phase des Prozesses. Durch ein geeignetes Phasenverschiebungselement kann die Phase des Prozesses stets so angepasst werden, dass sie in diesem stabilen Bereich liegt.

Hinsichtlich der notwendigen Stabilität des geschlossenen Kompensationskreises ist anzumerken, dass die Übertragungsfunktion eine unendlich hohe Verstärkung für die Kreisfrequenz $\omega_n$ und eine von $k_n$ abhängige Verstärkung für andere Frequenzen, welche mit der Differenz zwischen zu kompensierender Kreisfrequenz und betrachteter Frequenz abnimmt, hat. Für ausreichend kleine $k_n$ kann daher die Betrachtung auf die zu kompensierende Kreisfrequenz reduziert werden. Wenn die Phasenverschiebung des Prozesses für diese zu kompensierende Frequenz in einem Bereich von -90˚ bis + 90˚ liegt, ist durch die Vorzeichenumkehr im Kompensationskreis Stabilität gewährleistet. Bei einer relativ steifen Ankoppelung des Aktuators an die Kompensationsachse ist dieses für kleine Ordnungen in der Regel erfüllt. Liegt die Phasenverschiebung in einem Bereich von -180˚ bis 0˚, kann durch Schaltung eines Differenziergliedes vor oder nach der Kompensationseinrichtung eine Phasenanhebung um +90˚ erreicht werden. Dieses ist insbesondere für höhere Ordnungen zweckmäßig, da für diese der Prozess typischerweise eine Phasenverschiebung mit negativem Vorzeichen aufweist. Der Einsatz eines Differenziergliedes entspricht der Verwendung eines Geschwindigkeitssignals anstatt eines Winkelsignals zur Kompensation. Durch Schaltung eines Phasenverschiebungselementes für die zu kompensierende Kreisfrequenz kann für beliebige Ordnungen im stabilen Bereich -90˚ bis +90˚ gearbeitet werden. Für die Auswahl der Phasenverschiebungselemente ist nur eine ungefähre Kenntnis der frequenzabhängigen Phasenverschiebung des Prozesses erforderlich. Schwankungen der Prozessparameter sind daher unkritisch.

Alternativ zum Einsatz einer harmonischen Übertragungsfunktion fester Phase in Verbindung mit einem die Phase des Prozesses in den stabilen Bereich verschiebenden Phasenverschiebungselement ist auch ohne Phasenverschiebungselement durch Wahl der Phase $\varphi_n$ einer harmonischen Übertragungsfunktion der Form

$$G_{Rn}(s) = k_n \frac{s\cos\varphi_n + \omega_n \sin\varphi_n}{s^2 + \omega_n^2} \tag{6}$$

Stabilität erreichbar. Für kleine $k_n$ und Wahl von $\varphi_n$ entsprechend der gemessenen Phase $\hat{\varphi}_p$ des Prozesses an der Kompensationsfrequenz ist Stabilität auch bei um $\pm 90°$ schwankender Phase des Prozesses gegeben. In anderen Worten ausgedrückt, durch Wahl der Phase der harmonischen Übertragungsfunktion in Abhängigkeit der Phase des Prozesses an der Kompensationsfrequenz ist es möglich, den stabilen Bereich von $180°$ so zu legen, dass die gemessene Phase des Prozesses in diesem Bereich liegt. Wird die Phase der harmonischen Übertragungsfunktion gleich der gemessenen Phase des Prozesses an der Kompensationsfrequenz gewählt, liegt diese in der Mitte des stabilen Bereichs von $180°$.

Der erfindungsgemäße Kompensationsansatz mit harmonischer Übertragungsfunktion gilt nach dem internen Störmodell (Internal Model Principle) sehr allgemein für eine Vielzahl von Übertragungsfunktionen $G_R$ für zeitkontinuierliche oder zeitdiskrete Signale, die eine Sinus- oder Kosinusübertragungsfunktion als Bestandteil enthalten und daher den zur Kompensation erforderlichen harmonischen Signalanteil der Kreisfrequenz $\omega_n$ erzeugen können. Insbesondere ist eine Kompensation mit folgenden Cosinus-Übertragungsfunktionen oder mit folgenden Sinus-Übertragungsfunktionen, gegebenenfalls mit einem stabilitätssichernden Phasenverschiebungselement $G_V(z)$, möglich:

Cosinus-Übertragungsfunktion im s-Bereich $G_K(s) = k_R \dfrac{s}{s^2 + \omega_n^2}$ mit statischer Verstärkung 0; Cosinus-Übertragungsfunktion im z-Bereich mit Halteglied $HG_K(z) = k_R \dfrac{\sin\omega_n T}{\omega_n} \cdot \dfrac{z^{-1} - z^{-2}}{1 - 2z^{-1}\cos\omega_n T + z^{-2}}$ mit statischer Verstärkung 0 (wobei $HG_K(z) \,\|\, G_K(s)$); Cosinus-Übertragungsfunktion im z-Bereich

$G_K(z) = k_R T \dfrac{1 - z^{-1}\cos\omega_n T}{1 - 2z^{-1}\cos\omega_n T + z^{-2}}$ mit statischer Verstärkung $\dfrac{k_R T}{2}$ (wobei $G_K(z) \approx HG_K(z)$); sowie Cosinus-Übertragungsfunktion im z-Bereich ohne Halteglied ohne statische Verstärkung

$G_{Ko}(z) = \dfrac{k_R T}{2} \dfrac{1 - z^{-2}}{1 - 2z^{-1}\cos\omega_n T + z^{-2}}$ (wobei $G_{Ko}(z) = G_K(z) - \dfrac{k_R T}{2}$). Für kleine Abtastzeiten $T$ entspricht die Kompensationswirkung von $G_K(z)$ der von $G_K(s)$ und $HG_K(z)$. Allerdings ist die statische Verstärkung (für $\omega \to 0$) von

$G_K(z)$ nicht 0 sondern $\dfrac{k_R T}{2}$, mit der Möglichkeit eines unerwünschten Einflusses auf die Maschinenregelung. Durch Subtraktion der statischen Verstärkung von $G_K(z)$ erhält man $G_{Ko}(z)$ mit statischer Verstärkung 0.

Sinus-Übertragungsfunktion im s-Bereich $G_S(s) = k_R \dfrac{\omega_n}{s^2 + \omega_n^2}$ mit statischer Verstärkung $\dfrac{k_R}{\omega_n}$; Sinus-

Übertragungfunktion im s-Bereich ohne statische Verstärkung $G_{So}(s) = -\dfrac{k_R}{\omega_n} \cdot \dfrac{s^2}{s^2 + \omega_n^2}$ (wobei

$G_{So}(s) = G_S(s) - \dfrac{k_R}{\omega_n}$); Sinus-Übertragungfunktion im z-Bereich mit Halteglied

$$HG_S(z) = k_R \frac{1-\cos\omega_n T}{\omega_n} \cdot \frac{z^{-1}+z^{-2}}{1-2z^{-1}\cos\omega_n T + z^{-2}}$$ mit statischer Verstärkung $\frac{k_R}{\omega_n}$ (wobei $HG_S(z) \; \stackrel{\square}{} \; G_S(s)$); Sinus-Übertragungsfunktion im z-Bereich mit Halteglied ohne statische Verstärkung

$$HG_{So}(z) = -\frac{k_R}{\omega_n} \cdot \frac{1-z^{-1}(1+\cos\omega_n T) + z^{-2}\cos\omega_n T}{1-2z^{-1}\cos\omega_n T + z^{-2}}$$ (wobei $HG_{So}(z) = HG_S(z) - \frac{k_R}{\omega_n}$); Sinus-Übertragungsfunktion im z-Bereich ohne Halteglied $$G_S(z) = k_R T \frac{z^{-1}\sin\omega_n T}{1-2z^{-1}\cos\omega_n T + z^{-2}}$$ mit statischer Verstärkung $\frac{k_R T}{2}\cot\frac{\omega_n T}{2}$ (wobei

$G_S(z) \approx HG_S(z)$); sowie Sinus-Übertragungsfunktion im z-Bereich ohne Halteglied ohne statische Verstärkung $$G_{So}(z) = -\frac{k_R T}{2}\cot\frac{\omega_n T}{2} \cdot \frac{1-2z^{-1}+z^{-2}}{1-2z^{-1}\cos\omega_n T + z^{-2}}$$ (wobei $G_{So}(z) = G_S(z) - \frac{k_R T}{2}\cot\frac{\omega_n T}{2}$).

Für die Kompensation kann die Ausgangsgröße $y(k)$ der Kompensationseinrichtung mit der z-Übertragungsfunktion

$$G_R(z) = k_R \frac{b_0 + b_1 z^{-1} + b_2 z^{-2}}{1 + a_1 z^{-1} + a_2 z^{-2}} \qquad\qquad (7)$$

in jedem Abtastschritt $k$ rekursiv aus vorhergehenden Ausgangsgrößen $y(k$-1) und $y(k$-2) sowie aktueller Eingangsgröße $u(k)$ und vorhergehenden Eingangsgrößen $u(k$-1) und $u(k$-2) gemäß

$$y(k) = k_R(b_0 u(k) + b_1 u(k-1) + b_2 u(k-2)) - a_1 y(k-1) - a_2 y(k-2) \qquad\qquad (8)$$

berechnet werden.

Ohne Phasenverschiebungselement $G_V(z)$ ist bei kleinen $k_R$ Stabilität mit der Cosinus-Übertragungsfunktion näherungsweise für Phasenverschiebungen $\varphi_P$ des Prozesses an der Kompensationskreisfrequenz von -90˚ bis +90˚ gegeben und mit der Sinus-Übertragungsfunktion etwa für Phasenverschiebungen $\varphi_P$ des Prozesses an der Kompensationskreisfrequenz von 0˚ bis +180˚. Die Sinusübertragungsfunktionen ohne Phasenverschiebungselement wirken demnach ähnlich wie die Cosinus-Übertragungsfunktionen mit dem eine Phasenverschiebung von -90˚ erzeugenden negativen Differenzenquotienten $G_V(z) = -\frac{1-z^{-1}}{T}$ als Phasenverschiebungselement. Anders ausgedrückt, die Übertragungfunktionen sind mittels eines geeigneten Phasenverschiebungselements ineinander überführbar. Beispielsweise entspricht die Cosinus-Übertragungsfunktion ohne Halteglied mit diesem Phasenverschiebungselement

$$G_V(z)G_K(z) = -k_R \frac{1-z^{-1}(1+\cos\omega_n T) + z^{-2}\cos\omega_n T}{1-2z^{-1}\cos\omega_n T + z^{-2}} = \omega_n \cdot HG_{So}(z) \qquad\qquad (9)$$

bis auf den Faktor $\omega_n$ direkt der Sinusübertragungsfunktion $HG_{So}(z)$ mit Halteglied ohne statische Verstärkung. Es hängt vom Prozess an einer bedruckstoffverarbeitenden Maschine ab, ob ohne den Einsatz eines zusätzlichen Phasenverschiebungselements die Cosinus- oder die Sinus-Übertragungsfunktion besser geeignet ist.

Ohne den Einsatz eines Phasenverschiebungselements kann Stabilität auch durch die Auswahl von Cosinus- oder Sinus-Übertragungsfunktionen zur Kompensation jeweils mit einem der Vorzeichen + und - erreicht werden, beispielsweise durch

$$G_R(z) = \begin{cases} G_K(z) & -45° \leq \hat{\varphi}_P < +45° \\ G_S(z) & +45° \leq \hat{\varphi}_P < +135° \\ -G_K(z) & \hat{\varphi}_P < -135° \quad \text{oder} \quad \hat{\varphi}_P \geq 135° \\ -G_S(z) & -135° \leq \hat{\varphi}_P < -45° \end{cases} \quad \text{für} \quad ,$$

wobei $\hat{\varphi}_P$ die im Bereich -180˚...+180˚ gemessene Phasenverschiebung $\varphi_P$ des Prozesses an der Kompensationsfrequenz ist. Beide Möglichkeiten stellen für kleine Verstärkungsfaktoren $k_R$ Stabilität sicher. Für große $k_R$ hängt es vom Prozess ab, ob Stabilität gegeben ist.

In einer vorteilhaften Weiterentwicklung des Verfahrens ist bei kleinen Verstärkungsfaktoren $k_R$ auch ohne Phasenverschiebungselement durch eine, entsprechend der gemessenen Phasenverschiebung $\hat{\varphi}_P$ des Prozesses an der Kompensationsfrequenz gewichtete, parallele Anwendung von Sinus- und Cosinus-Übertragungsfunktionen für beliebige Phasenverschiebungen des Prozesses maximale Robustheit des Verfahrens gegenüber Schwankungen der Phasenverschiebung $\varphi_P$ des Prozesses erreichbar. Dazu wird die Kosinusübertragungsfunktion mit cos $\hat{\varphi}_P$ und eine zugehörige Sinusübertragungsfunktion mit sin $\hat{\varphi}_P$ gewichtet. Einerseits ist bei dieser Gewichtung Stabilität der Kompensation auch bei um bis zu $\pm 90˚$ schwankender Phasenverschiebung $\varphi_P$ des Prozesses an der Kompensationsfrequenz gegenüber dem gemessenen $\hat{\varphi}_P$ gegeben. Andererseits ist das Einschwingen der Kompensation bei gegebenem Verstärkungsfaktor maximal schnell, falls $\hat{\varphi}_P = \varphi_P$, d.h. gemessene und tatsächliche Phasenverschiebung des Prozesses an der Kompensationsfrequenz übereinstimmen.

Für die oben angegebene Cosinus-Übertragungsfunktion im z-Bereich ohne Halteglied und die entsprechende Sinusübertragungsfunktion erhält man beispielsweise als resultierende harmonische Übertragungsfunktion

$$G(z) = G_K(z)\cos\hat{\varphi}_P + G_S(z)\sin\hat{\varphi}_P = k_R T \frac{(1-z^{-1}\cos\omega_n T)\cos\hat{\varphi}_P + (z^{-1}\sin\omega_n T)\sin\hat{\varphi}_P}{1-2z^{-1}\cos\omega_n T + z^{-2}} \qquad (10)$$

und für die z-Übertragungsfunktion ohne Halteglied und ohne statische Verstärkung

$$G_o(z) = G_{Ko}(z)\cos\hat{\varphi}_P + G_{So}(z)\sin\hat{\varphi}_P = \frac{k_R T}{2} \cdot \frac{(1-z^{-2})\cos\hat{\varphi}_P - \cot\frac{\omega_n T}{2}(1-2z^{-1}+z^{-2})\sin\hat{\varphi}_P}{1-2z^{-1}\cos\omega_n T + z^{-2}} \qquad . \quad (11)$$

Für die resultierenden z-Übertragungsfunktionen mit Halteglied ergibt sich entsprechend

$$HG(z) = HG_K(z)\cos\hat{\varphi}_P + HG_S(z)\sin\hat{\varphi}_P$$

$$= \frac{k_R}{\omega_n} \cdot \frac{(\sin\omega_n T)(z^{-1}-z^{-2})\cos\hat{\varphi}_P + (1-\cos\omega_n T)(z^{-1}+z^{-2})\sin\hat{\varphi}_P}{1-2z^{-1}\cos\omega_n T + z^{-2}} \qquad (12)$$

und

$$HG_o(z) = HG_K(z)\cos\hat{\varphi}_P + HG_{So}(z)\sin\hat{\varphi}_P$$

$$= \frac{k_R}{\omega_n} \cdot \frac{(\sin\omega_n T)(z^{-1}-z^{-2})\cos\hat{\varphi}_P - (1-(1+\cos\omega_n T)z^{-1}+(\cos\omega_n T)z^{-2})\sin\hat{\varphi}_P}{1-2z^{-1}\cos\omega_n T + z^{-2}} \qquad (13)$$

und für die Übertragungsfunktionen im s-Bereich für kontinuierliche Signale

$$G(s) = G_K(s)\cos\hat{\varphi}_P + G_S(s)\sin\hat{\varphi}_P = k_R \, \frac{s\cdot\cos\hat{\varphi}_P + \omega_n\cdot\sin\hat{\varphi}_P}{s^2 + \omega_n^2} \qquad (14)$$

und

$$G_o(s) = G_K(s)\cos\hat{\varphi}_P + G_{So}(s)\sin\hat{\varphi}_P = k_R \, \frac{s\cdot\cos\hat{\varphi}_P - \dfrac{s^2}{\omega_n}\cdot\sin\hat{\varphi}_P}{s^2 + \omega_n^2} \; . \qquad (15)$$

Das Verhältnis der zusammengehörigen Sinus- und Kosinusübertragungsfunktionen

$$\lim_{\omega\to\omega_n}\frac{G_K(s)}{G_S(s)} = \lim_{\omega\to\omega_n}\frac{G_K(s)}{G_{So}(s)} = \lim_{\omega\to\omega_n}\frac{HG_K(z)}{HG_S(z)} = \lim_{\omega\to\omega_n}\frac{HG_K(z)}{HG_{So}(z)} = \lim_{\omega\to\omega_n}\frac{G_K(z)}{G_S(z)} = \lim_{\omega\to\omega_n}\frac{G_{Ko}(z)}{G_{So}(z)} = i \quad \text{bei}$$

der Kompensationsfrequenz ist jeweils die imaginäre Einheit i, so dass diese Funktionen dort zueinander orthogonal sind und den gleichen Betrag haben. Durch die gewählte gewichtete Addition dieser Funktionen entstehen harmonische Gesamtübertragungsfunktionen, welche für einen Prozess mit Phasenverschiebung $\hat{\varphi}_P$ an der Kompensationsfrequenz abgestimmt sind.

Für die Abklingkonstante $T_A$, die angibt, nach welcher Zeit die Amplitude der Störung auf $e^{-1} \approx 37\%$ abgeklungen ist, gilt bei genau bekannter Verstärkung $\hat{k}_P = k_P$ und Phasenverschiebung $\hat{\varphi}_P = \varphi_P$ des Prozesses für kleine $k_R$ dann

$$T_A \approx \mathbf{T_A} \approx \frac{2}{k_R k_P} \; .$$

Bei Verwendung der oben angegebenen Cosinus-Übertragungsfunktionen gilt dagegen bei asymptotischer Stabilität

die Beziehung $\mathbf{T_{AK}} \approx \dfrac{2}{k_R k_P \cos\varphi_P}$ und bei Verwendung der oben angegebenen Sinus-Übertragungsfunktionen die

Beziehung $\mathbf{T_{AS}} \approx \dfrac{2}{k_R k_P \sin\varphi_P} \; .$

Diese Beziehungen erlauben eine eindeutige Parametrierung der Kompensation in Abhängigkeit der gemessenen Verstärkung $\hat{k}_P$ und Phasenverschiebung $\hat{\varphi}_P$ des Prozesses sowie der wählbaren Abklingkonstante $T_A$.

Die Figur 1 zeigt eine Ausführungsform einer Kompensationseinrichtung 9 mit einer Anzahl von parallel wirkenden Filtern 13 mit harmonischer Übertragungsfunktionen, welche jeweils unterschiedliche, einer zu kompensierenden Schwingung entsprechende Frequenzparameter aufweisen. An die Eingänge dieser Filter 13 wird das einen Winkelgrößenverlauf repräsentierende Signal mit zu kompensierenden Schwingungen zugeführt. Die Ausgänge der Filter 13 werden aufaddiert. Die Summe bildet somit den Gesamtausgang der Kompensationseinrichtung 9. Die Steuerung 14 der bedruckstoffverarbeitenden Maschine ist mit den Filtern 13 verbunden. Die zu kompensierenden Ordnungen werden gegebenenfalls auch geschwindigkeitsabhängig von der Steuerung 14 vorgegeben und/oder berechnet. Die Parameter der harmonischen Übertragungsfunktionen, insbesondere die $b_n$ nach Gleichung (3), können in der Steuerung 14 oder in einer Recheneinrichtung der Kompensationseinrichtung 9 bestimmt werden. Es kann auch vorgesehen sein, dass die Steuerung 14 anstatt Ordnungen feste Kreisfrequenzen vorgibt und/oder mit Messeinrichtungen an der bedruckstoffverarbeitenden Maschine bestimmt, falls frequenzfeste Störungen auftreten.

Die Figur 2 ist eine schematische Darstellung einer vorteilhaften Weiterbildung des Aufbaus einer erfindungsgemäßen Kompensationseinrichtung. Den Filtern 13 mit Übertragungsfunktion sind jeweils Phasenverschiebungselemente 12 vorgeordnet. Ein Phasenverschiebungselement 12 ist bevorzugt ein lineares Glied, welches die Phase an der Kreisfrequenz des ihm nachgeordneten Filters 13 beeinflusst. An dieser Stelle sei angemerkt, dass das Phasenverschiebungselement je nach Auslegung die Phase nur an der zu kompensierenden Kreisfrequenz beeinflussen oder Phasen für beliebige Kreisfrequenzen beeinflussen kann. Relevant ist selbstverständlich nur die Phasenverschiebung für die zu kompensierende Kreisfrequenz. Die Steuerung 14 bestimmt die Struktur oder Parameter der Phasenverschiebungselemente, insbesondere die Kreisfrequenz und den Betrag und die Richtung der Phasenverschiebung. Einfache Übertragungsfunktionen der Phasenverschiebung können beispielsweise die Identität, also der Faktor 1, sein (keine Phasenverschiebung) oder eine Differenzierung (Phasenverschiebung um +90˚) oder eine Invertierung (Phasenverschiebung um +180˚) oder eine Invertierung der Differenzierung (Phasenverschiebung um -90˚). In einer sehr einfachen Weiterbildung ist die Auswahl der zwei Möglichkeiten Faktor 1 oder Differenzierung durch die Steuerung vorgesehen. In einer umfangreichen Weiterbildung sind die Phasenverschiebungselemente 12 für beliebige Phasenverschiebungen abhängig von der durch den Prozess erzeugten Phasenverschiebung im gesamten Winkelbereich zwischen 0˚ und 360˚ einstellbar. Bei Einsatz einer Cosinus-Übertragungsfunktion wird bevorzugt ein Phasenverschiebungselement mit von 0˚ bis +90˚ einstellbarer Phasenverschiebung eingesetzt.

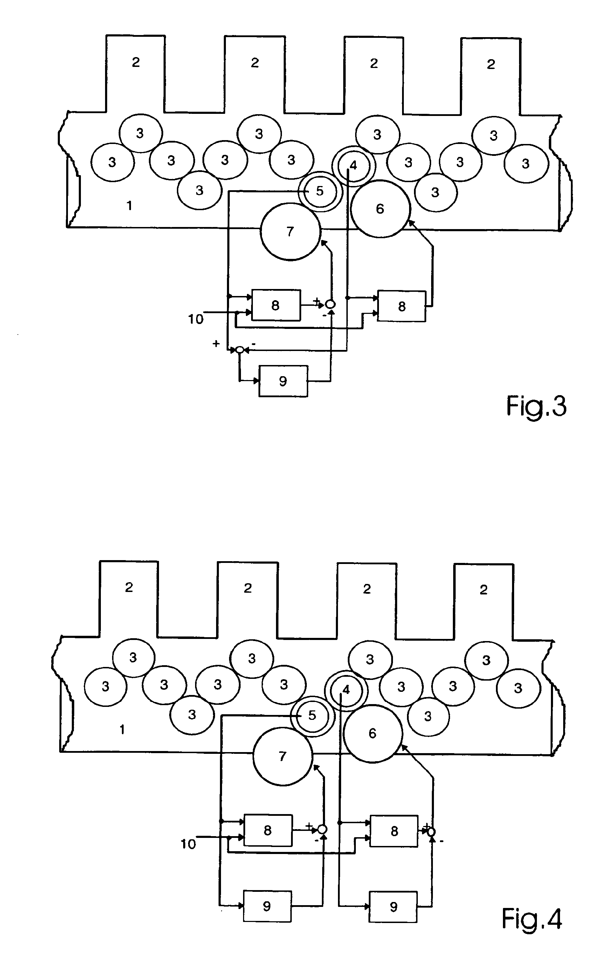

Die Figur 3 bezieht sich schematisch auf einen Ausschnitt einer bedruckstoffverarbeitenden Maschine 1 mit getrenntem Räderzug, zweier Regelungsvorrichtungen und einer erfindungsgemäßen Schwingungskompensation. Die gezeigte vorteilhafte Ausführungsform betrifft eine Übergabestelle zwischen zwei bogenführenden Zylindern, erster Zylinder 4 und zweiter Zylinder 5, in einer Bogendruckmaschine mit mehreren Druckwerken 2 und Zylindern 3. Der Räderzug zwischen erstem Zylinder 4 und zweiten Zylinder 5 ist getrennt. Der erste Zylinder 4 erfährt eine Winkelregelung mittels eines Regelelementes 8 und mit einem ersten Aktuator 6, in einfacher Ausführung mit einem Motor. Der zweite Zylinder 5 erfährt ebenfalls eine Winkelregelung mittels eines Regelementes 8 und mit einem zweiten Aktuator 7, in einfacher Ausführung mit einem Motor. Den Regelelementen 8 werden repräsentative Signale für den Verlauf der Winkelgrößen (Wert der Winkelgröße) der zugeordneten Zylinder, beispielsweise gewonnen durch Winkellagegeber, zugeführt. Die Regelelemente 8 können einfache Differenzregler oder auch Regler, welche komplizierte Transformationen (Integrationen, Differentiationen) umfassen, sein. Die auf die Winkelgrößen der zugeordneten Zylinder einwirkenden Aktuatoren 6, 7 können in einer ersten Ausführungsform die Einzelantriebe der zugeordneten Zylinder sein, in einer zweiten Ausführungsform zusätzliche Hilfsantriebe für die zugeordneten Zylinder sein, welche durch einen Hauptantrieb bewegt werden. Den Regelementen 8 wird ein Sollwert des repräsentativen Signals, Winkelgrößensollwert 10, zugeführt. Im Zusammenhang der Darstellung der Ausführungsformen wird hier und in der Folge nur von einem Winkelgrößensollwert gesprochen. Es ist aber klar, dass für jeden Zylinder auch unterschiedliche Sollwerte für die einzelnen Winkelgrößen der Zylinder vorgegeben sein können und entsprechend den Regelelementen 8 zugeführt werden können. Um störende Ordnungen von Schwingungen, welche die Wiederholungsgenauigkeit der Bogenübergabe zwischen dem ersten Zylinder 4 und dem zweiten Zylinder 5 beeinträchtigen, zu verringern oder zu eliminieren, wird der Differenzwinkel zwischen Zylinder 4 und Zylinder 5 oder eine davon linear abhängige Größe, ein Maß für den Differenzwinkel, dem Kompensationselement 9 zugeführt (siehe Subtraktionspunkt vor dem Kompensationselement 9). Das Ausgangssignal des Kompensationselements 9 wird dem Ausgangssignal des Regelements 8 (siehe Subtraktionspunkt nach dem Regelelement 8 des zweiten Zylinders 5) überlagert. Es ist klar, dass alternativ dazu die Überlagerung auch am Ausgangssignal des Regelements 8 des ersten Zylinders 4 erfolgen kann. Im dargestellten Zusammenhang ist klar, dass teilweise Additionen und teilweise Subtraktionen der einzelnen Signale stattfinden. In vorteilhafter Weise wird in der hier vorgestellten Ausführungsform nur ein Kompensationselement 9 benötigt, mit welchem die störenden Ordnungen von Schwingungen direkt aus der Zielgröße entfernt werden können. Dieses kann mit einer großen Präzision erfolgen.

Figur 4 ist eine schematische Darstellung eines Ausschnitts einer Ausführungsform einer bedruckstoffverarbeitenden Maschine 1, welche mehrere Druckwerke 2 und mehrere Zylinder 3 aufweist, mit getrenntem Räderzug, zwei Regelungsvorrichtungen und zwei erfindungsgemäßen Schwingungskompensationen. Im Gegensatz zur Kompensation der Winkeldifferenz in der mittels Figur 3 dargestellten Ausführungsform erfolgt in der Ausführungsform dieser Figur 4 eine separate Kompensation der Schwingungen an der Übergabestelle zwischen erstem Zylinder 4 und zweiten Zylinder 5 in den einzelnen Winkelgrößen. Vorteilhaft bei dieser Ausführungsform ist die Verringerung oder Elimination der absoluten Winkelgrößenschwingungen der Zylinder 4, 5, gegebenenfalls sogar der zwei Maschenteile, welche den ersten beziehungsweise den zweiten Zylinder umfassen, im Gegensatz zur Verringerung oder Elimination der relativen Winkelgrößenschwingungen in der Ausführungsform der Figur 3. Eine Kompensation erfolgt direkt in den Zielgrößen mittels zwei Kompensationselementen 9, welche jeweils dem Regelelement 8, zugeordnet sind. Diese Ausführungsform ist symmetrisch für den ersten Zylinder 4 und den zweiten Zylinder 5: Jedem der Zylinder 4,5 ist jeweils ein Regelement 8 zugeordnet, dem ein repräsentativen Signal für die Winkelgröße des Zylinders (Wert der Winkelgröße) und ein Winkelgrößensollwert 10 zugeführt werden. Parallel zum Regelelement 8 ist jeweils ein Kompensationselement 9 vorgesehen, dessen Ausgangssignal dem Ausgangssignal des Regelelementes überlagert wird (Subtraktionspunkte nach Regelementen 8). Die überlagerten Signale werden dem ersten Aktuator 6 beziehungsweise dem zweiten Aktuator 7 zugeführt.

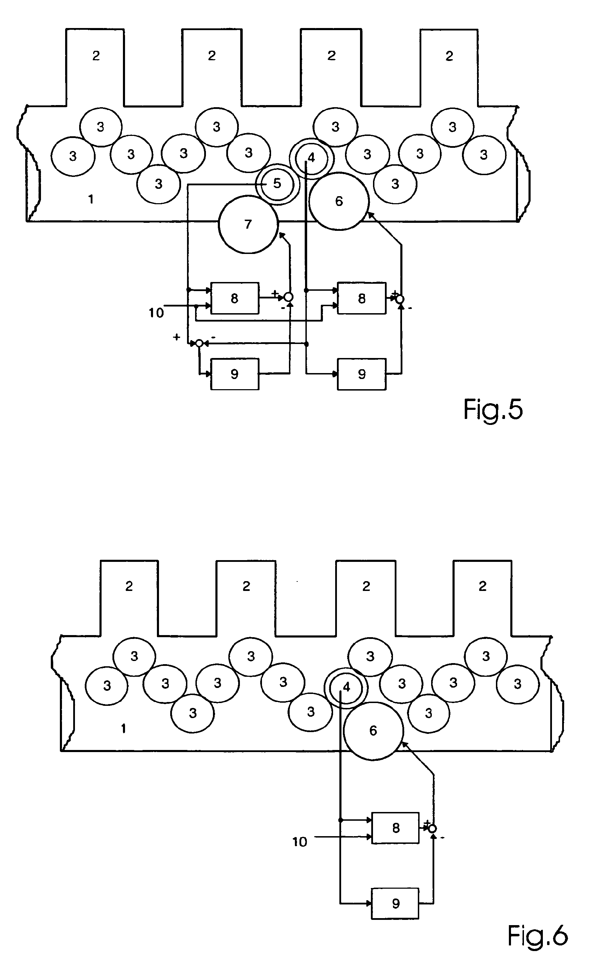

Die Figur 5 ist ein Ausschnitt einer alternativen Ausführungsform einer bedruckstoffverarbeitenden Maschine 1, welche mehrere Druckwerke 2 und Zylinder 3 umfasst, mit getrenntem Räderzug, zwei Regelungsvorrichtungen und zwei erfindungsgemäßen Schwingungskompensationen. In dieser Ausführungsform zur Kompensation von Schwingungen an einer Übergabestelle zwischen zwei bogenführenden Zylindern erfolgt einerseits eine separate Kompensation für den ersten Zylinder 4 und für den zweiten Zylinder 5, andererseits wird aber auch eine relative Kompensation für die Winkeldifferenz, hier beispielhaft für den zweiten Zylinder 5 gezeigt, durchgeführt. Diese Ausführungsform verbindet in vorteilhafter Weise eine absolute Verringerung der Schwingungen mit der relativen Verringerung der Schwingungen (relevante Winkelgröße für die Bogenübergabe). Dem ersten Zylinder 4 ist ein Regelement 8 zugeordnet, dem ein repräsentatives Signal für die Winkelgröße des ersten Zylinders 4 (Wert der Winkelgröße) und ein Winkelgrößensollwert 10 zugeführt werden. Parallel zum Regelelement 8 ist ein Kompensationselement 9 vorgesehen, dessen Ausgangssignal dem Ausgangssignal des Regelelementes am Subtraktionspunkt nach dem Regelementen 8 überlagert wird. Das überlagerte Signal wird dem ersten Aktuator 6 zugeführt. Dem zweiten Zylinder 5 ist auch ein Regelement 8 zugeordnet, dem ein repräsentatives Signal für die Winkelgröße des zweiten Zylinders 5 (Wert der Winkelgröße) und ein Winkelgrößensollwert 10 zugeführt werden. Der Differenzwinkel zwischen Zylinder 4 und Zylinder 5 oder eine davon linear abhängige Größe, ein Maß für den Differenzwinkel, wird dem Kompensationselement 9 an einem Subtraktionspunkt zugeführt. Das Ausgangssignal des Kompensationselements 9 wird dem Ausgangssignal des Regelements 8 an einem Subtraktionspunkt nach dem Regelelement 8 des zweiten Zylinders 5 überlagert. Das überlagerte Signal wird dem zweiten Aktuator 7 zugeführt.

Die Figur 6 zeigt einen Ausschnitt einer alternativen Ausführungsform einer bedruckstoffverarbeitenden Maschine 1, mit mehreren Druckwerken 2 und Zylindern 3, mit einer Regelungsvorrichtung und einer erfindungsgemäßen Schwingungskompensation für einen Zylinder. Die bedruckstoffverarbeitende Maschine 1 dieser Ausführungsform kann entweder einen durchgehenden Räderzug oder einen unterbrochenen Räderzug aufweisen. Der Einsatz einer erfindungsgemäßen Kompensationseinrichtung 9 und der Einsatz einer erfindungsgemäßen Regelungsvorrichtung mit Regelement 8 und Kompensationseinrichtung 9 ist nicht auf die Verringerung von Schwingungen an Übergabepunkten zwischen bogenführenden Zylindern begrenzt, sondern kann im allgemeinen zu einer verbesserten Regelung beziehungsweise Kompensation von Schwingungen von Zylindern, beispielsweise Druckformzylinder, Übertragungs- oder Gummituchzylinder oder Gegendruckzylinder, sowie Walzen und Rollen in Farb- und/oder Feuchtwerken genutzt werden. In Figur 6 ist ein Beispiel einer Regelung mit paralleler Kompensation für einen ersten Zylinder 4 gezeigt: Mittels eines Winkellagegebers wird ein repräsentatives Signal für den Verlauf der Winkelgröße (zeitlicher Verlauf des Wertes der Winkelgröße) erzeugt und dem Regelelement 8 gemeinsam mit einem Winkelgrößensollwert 10 zugeführt. Das Regelelement 8 kann ein einfacher Differenzregler oder auch ein Regler, welcher komplizierte Transformationen (Integrationen, Differentiationen) umfasst, sein. Das für den Verlauf der Winkelgröße repräsentative Signal wird parallel auch dem Kompensationselement 9 zugeführt. Dessen Ausgangssignal wird dem Ausgangssignal des Regelelements 8 am Subtraktionspunkt nach dem Regelementen 8 überlagert. Das überlagerte Signal wird dem ersten Aktuator 6 zugeführt. Da die zu kompensierende Frequenz beziehungsweise die zu kompensierenden Frequenzen des Kompensationselementes 9 einstellbar sind, können neben Schwingungen nichtganzzahliger Ordnung im Vergleich zur Maschinenfrequenz auch Schwingungen ganzzahliger Ordnung kompensiert werden.

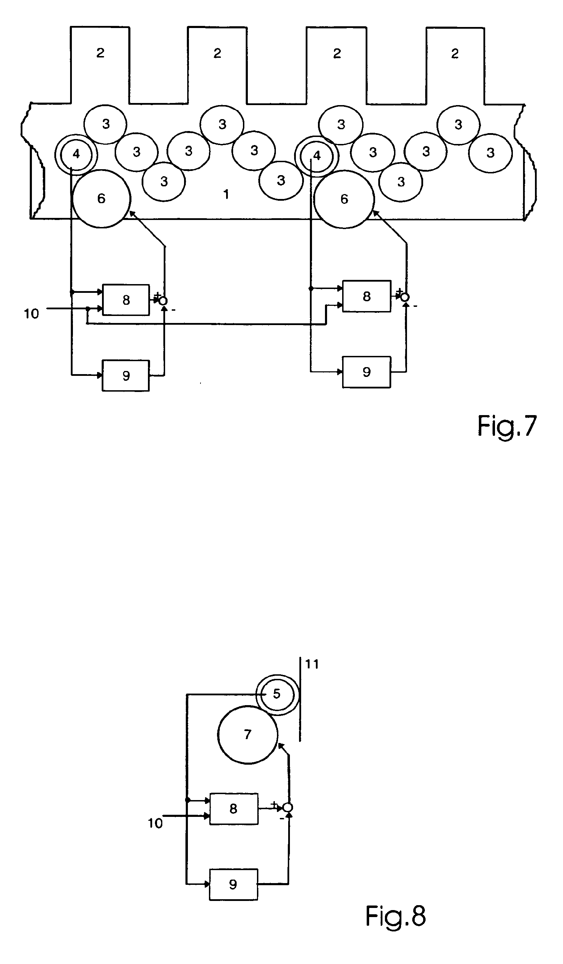

Die Figur 7 bezieht sich auf einen Ausschnitt einer Ausführungsform einer bedruckstoffverarbeitenden Maschine 1 mit wenigstens zwei Druckwerken 2, denen jeweils ein Regelungselement 8 und eine erfindungsgemäße Schwingungskompensation durch ein Kompensationselement 9 für einen Zylinder zugeordnet ist. Mit einer derartigen Ausführungsform können in vorteilhafter Weise auch Schwingungen im Räderzug verringert oder sogar eliminiert werden. An verschiedenen Stellen des Räderzuges sind Aktuatoren 6, beispielsweise einzelne Motoren, vorgesehen, welche jeweils auf Zylinder 4 wirken. Um Flankenwechsel an Zahnrädern im Räderzug zu vermeiden, sind die Aktuatoren 6 beispielsweise durch die Wahl des mittleren Motorenmomentes derart zu regeln, dass der Energiefluss in der bedruckstoffverarbeitenden Maschine 1 nirgendwo sein Vorzeichen wechselt. Jedem Zylinder 4 ist jeweils ein Regelement 8 zugeordnet, dem ein repräsentativen Signal für die Winkelgröße des zugeordneten Zylinders 4 (Wert der Winkelgröße) und ein Winkelgrößensollwert 10 zugeführt werden. Parallel zum Regelelement 8 ist jeweils ein Kompensationselement 9 vorgesehen, dessen Ausgangssignal dem Ausgangssignal des Regelelementes 8 am Subtraktionspunkt nach dem Regelementen 8 überlagert wird. Das überlagerte Signal wird dem Aktuator 6 zugeführt.

Die Figur 8 ist eine schematische Darstellung einer Ausführungsform einer Regelungsvorrichtung mit einer erfindungsgemäßen Schwingungskompensation für einen Zylinder 5 einer Rollendruckmaschine. Diese Ausführungsform soll illustrieren, dass der Einsatz der Erfindung nicht auf bogenverarbeitende Druckmaschinen begrenzt ist. Dem Zylinder 5 ist ein Regelement 8 zugeordnet, dem ein repräsentatives Signal für die Winkelgröße des Zylinders 5 (Wert der Winkelgröße) und ein Winkelgrößensollwert 10 zugeführt werden. Parallel zum Regelelement 8 ist ein Kompensationselement 9 vorgesehen, dessen Ausgangssignal dem Ausgangssignal des Regelelementes 8 am Subtraktionspunkt nach dem Regelementen 8 überlagert wird. Das überlagerte Signal wird dem Aktuator 7 zugeführt. Neben Schwingungen nichtganzzahliger Ordnung im Vergleich zur Maschinenfrequenz können auch Schwingungen ganzzahliger Ordnung mittels dem erfindungsgemäßen Kompensationselement 9 verringert oder eliminiert werden.

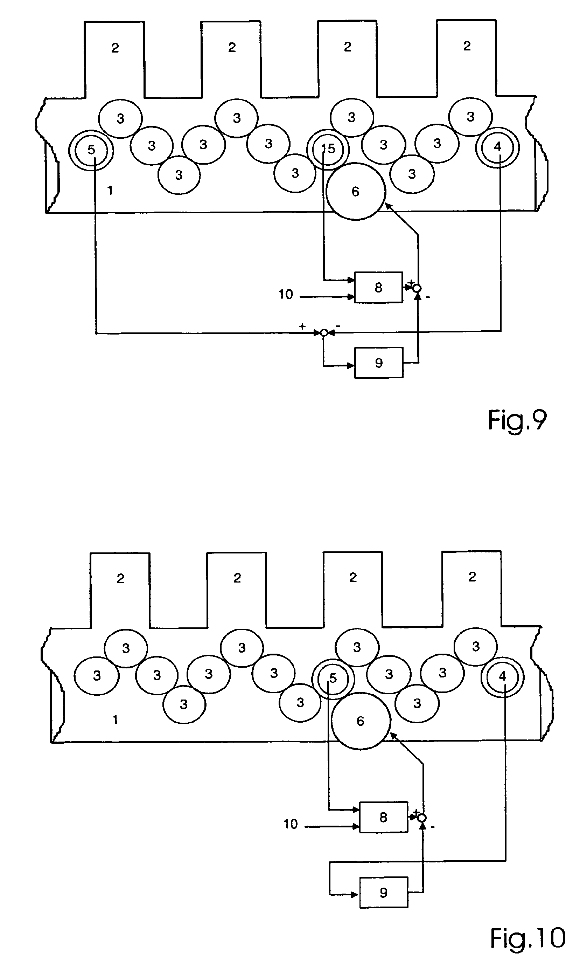

Die Figur 9 zeigt einen Ausschnitt einer weiteren alternativen Ausführungsform einer bedruckstoffverarbeitenden Maschine 1 mit einer Regelungsvorrichtung und einer erfindungsgemäßen Schwingungskompensation. Diese Ausführungsform ist besonders vorteilhaft, um in bedruckstoffverarbeitenden Maschinen ohne aufgetrennten Räderzug eine Kompensation von Schwingungen nahe der ersten Eigenfrequenz durchzuführen, da die erste Eigenfrequenz (Schwingungsbäuche an den offenen Enden und ein Schwingungsknoten dazwischen) hier in der gesamten Maschine weitgehend ausgelöscht werden kann. Die mit Drehgebem versehenen Zylinder sind dabei in der Nähe der Maschinenenden angeordnet. Die bedruckstoffverarbeitende Maschine 1, welche mehrere Druckwerke 2 und mehrere Zylinder 3 aufweist, weist eine Kompensationseinrichtung 9 auf, an deren Eingang die Differenz der Drehwinkellagesignale der Drehgeber des ersten Zylinders 4 und des zweiten Zylinders 5 anliegt, auf. Das Ausgangssignal der Kompensationseinrichtung 9 wird vom Ausgangssignal des Regelelements 8, dem das Winkellagesignal eines zu kompensierenden dritten Zylinders 15 und ein Winkelgrößensollwert zugeführt wird, abgezogen. Geregelt wird mittels eines ersten Aktuators 6, welcher auf den dritten Zylinder 15 wirkt. Mit einer Anordnung gemäß Figur 9 kann bei bestimmten Kompensationsanordnungen, insbesondere mit Kompensationsfrequenzen in der Nähe der ersten Eigenfrequenz, das bereits in der Ausführungsform gemäß Figur 7 beabsichtigte Kompensationsresultat mit nur einem Stellglied, beispielsweise dem Hauptmotor, in vorteilhafter Weise erreicht werden.

In der Figur 10 ist eine andere weitere Ausführungsform einer bedruckstoffverarbeitenden Maschine 1 mit einer Regelungsvorrichtung und einer erfindungsgemäßen Schwingungskompensation dargestellt. Diese Ausführungsform ist vorteilhaft zur Störungskompensation von Ordnungen, welche nicht in der Nähe der ersten Eigenfrequenz liegen, insbesondere für niedrigere Frequenzen als die erste Eigenfrequenz. Die bedruckstoffverarbeitende Maschine 1, welche mehrere Druckwerke 2 und mehrere Zylinder 3 aufweist, weist eine Kompensationseinrichtung 9 auf, an deren Eingang das Drehwinkellagesignal des Drehgebers des ersten Zylinders 4 anliegt, auf. Das Ausgangssignal der Kompensationseinrichtung 9 wird vom Ausgangssignal des Regelelements 8, dem das Winkellagesignal eines zu kompensierenden Zylinders 5 und ein Winkelgrößensollwert zugeführt wird, abgezogen. Geregelt wird mittels eines ersten Aktuators 6, welcher auf den Zylinder 5 wirkt.

Es sei erneut betont, dass Ausführungsformen mit unterschiedlichen Anordnungen je nach zu kompensierender Frequenz unterschiedlich vorteilhaft sein können. Eine modale Betrachtungsweise der gesamten beobachteten Schwingung lässt Rückschlüsse auf vorteilhafte Anordnungen zu: Eine Messung und/oder Kompensation einer Schwingung ist an denjenigen Punkten schwierig, an denen die Schwingung einen Knoten aufweist oder nur eine geringe Amplitude hat.

**BEZUGSZEICHENLISTE**

| 1 | bedruckstoffverarbeitende Maschine |
| 2 | Druckwerk |
| 3 | Zylinder |
| 4 | erster Zylinder |
| 5 | zweiter Zylinder |
| 6 | erster Aktuator zur Regelung des ersten Zylinders |
| 7 | zweiter Aktuator zur Regelung des zweiten Zylinders |
| 8 | Regelelement |
| 9 | Kompensationseinrichtung |
| 10 | Winkelgrößensollwert |
| 11 | Bedruckstoffbahn |
| 12 | Phasenverschiebungselement |
| 13 | Filter mit Übertragungsfunktion |
| 14 | Steuerung |
| 15 | dritter Zylinder |

**Patentansprüche**

1. Kompensationseinrichtung (9) für Schwingungen einer Winkelgröße in einer bedruckstoffverarbeitenden Maschine (1), mit einem zugeordneten, auf die Winkelgröße einwirkenden Aktuator (6), wobei der Kompensationseinrichtung (9) ein für den Winkelgrößenverlauf repräsentatives Signal zugeführt wird und die Kompensationseinrichtung (9) ein Ausgangssignal für den Aktuator (6) erzeugt
   **dadurch gekennzeichnet, dass**
   die Kompensationseinrichtung (9) wenigstens ein Filter (13) in Form einer Übertragungsfunktion oder einer Summe von Übertragungsfunktionen, deren Frequenzparameter den zu kompensierenden Schwingungsfrequenzen entsprechen, aufweist, durch deren Wirkung das Ausgangssignal der Kompensationseinrichtung (9) an wenigstens einer der zu kompensierenden diskreten Frequenz aus dem repräsentativen Signal gewonnen wird, wobei die Übertragungsfunktion für jede der zu kompensierenden Frequenzen harmonisch ist und jeweils im Z-Bereich oder im S-Bereich dargestellt ist.

2. Kompensationseinrichtung (9) für Schwingungen einer Winkelgröße in einer bedruckstoffverarbeitenden Maschine (1) gemäß Anspruch 1,
**dadurch gekennzeichnet,**
**dass** die Winkelgröße ein Drehwinkel eines Zylinders (4,5) oder eine Drehwinkeldifferenz eines ersten Zylinders (4) und eines zweiten Zylinders (5) ist.

3. Kompensationseinrichtung (9) für Schwingungen einer Winkelgröße in einer bedruckstoffverarbeitenden Maschine (1) gemäß Anspruch 1,
**dadurch gekennzeichnet,**
**dass** die Übertragungsfunktion eine Cosinus-Übertragungsfunktion oder eine Sinusübertragungsfunktion oder eine gewichtete Summe einer Cosinus-Übertragungsfuktion und einer Sinus-Übertragungsfunktion ist.

4. Kompensationseinrichtung (9) für Schwingungen einer Winkelgröße in einer bedruckstoffverarbeitenden Maschine (1) gemäß einem der vorstehenden Ansprüche,
**dadurch gekennzeichnet,**
**dass** das repräsentative Signal für den Winkelgrößenverlauf eine Zeitreihe, eine durch an Zeitpunkten festgestellte Signalfolge, ist.

5. Kompensationseinrichtung (9) für Schwingungen einer Winkelgröße in einer bedruckstoffverarbeitenden Maschine (1) gemäß einem der vorstehenden Ansprüche,
**dadurch gekennzeichnet,**
**dass** die Kompensationseinrichtung (9) eine Recheneinrichtung umfasst, wobei in der Recheneinrichtung ein Programm abläuft, welches wenigstens einen Abschnitt aufweist, in welchem das Ausgangssignal aus dem repräsentativen Signal unter Wirkung der Übertragungsfunktion auf das repräsentative Signal gewonnen wird.

6. Kompensationseinrichtung (9) für Schwingungen einer Winkelgröße in einer bedruckstoffverarbeitenden Maschine (I) gemäß einem der vorstehenden Ansprüche,
**dadurch gekennzeichnet,**
**dass** in der Kompensationseinrichtung (9) wenigstens ein lineares Phasenverschiebungselement (12) dem Filter (13) vorgeordnet oder nachgeordnet ist oder im Filter (13) enthalten ist.

7. Regelungsvorrichtung für eine Winkelgröße in einer bedruckstoffverarbeitenden Maschine (1), mit einem Winkelgrößengeber, einem Regelelement (8), einem auf die Winkelgröße einwirkenden Aktuator (6),
**dadurch gekennzeichnet,**
**dass** die Regelungsvorrichtung eine Kompensationseinrichtung (9) für Schwingungen der Winkelgröße gemäß einem der vorstehenden Ansprüche aufweist, wobei das Ausgangssignal der Kompensationseinrichtung (9) dem Ausgangsignal des Regelelements (8) überlagert wird.

8. Regelungsvorrichtung für eine Winkelgröße in einer bedruckstoffverarbeitenden Maschine (1) gemäß Anspruch 7,
**dadurch gekennzeichnet,**
**dass** das repräsentative Signal den Wert der Winkelgröße oder den Wert der Winkelgrößenänderung oder den Wert der Winkelgrößenbeschleunigung darstellt.

9. Regelungsvorrichtung für eine Winkelgröße in einer bedruckstoffverarbeitenden Maschine (1) gemäß Anspruch 7 oder Anspruch 8,
**dadurch gekennzeichnet,**
**dass** das Regelelement (8) einen Eingang für Istwerte des repräsentativen Signals der Winkelgröße und einen Eingang für Sollwerte des repräsentativen Signals der Winkelgröße aufweist.

10. Druckwerk (2) in einer bedruckstoffverarbeitenden Maschine (1) mit wenigstens einem Zylinder (4),
**gekennzeichnet durch**
eine Kompensationseinrichtung (9) gemäß einem der Ansprüche 1 bis 6 und/oder eine Regelungsvorrichtung gemäß einem der Ansprüche 7 bis 9, welche dem Zylinder (4) zugeordnet ist.

11. Druckwerk (2) in einer bedruckstoffverarbeitenden Maschine (1) mit wenigstens einem ersten Zylinder (4) und einem zweiten Zylinder (5),
**gekennzeichnet durch**
eine Kompensationseinrichtung (9) gemäß einem der Ansprüche 1 bis 6 und/oder eine Regelungsvorrichtung gemäß einem der Ansprüche 7 bis 9, welche dem ersten Zylinder (4) und dem zweiten Zylinder (5) zugeordnet ist.

12. Druckwerkgruppe in einer bedruckstoffverarbeitenden Maschine mit wenigstens einem ersten Zylinder (4) in einem ersten Druckwerk (2) und einem zweiten Zylinder (5) in einem zweiten Druckwerk (2),
**gekennzeichnet durch**
eine Kompensationseinrichtung (9) gemäß einem der Ansprüche 1 bis 6 und/oder eine Regelungsvorrichtung gemäß einem der Ansprüche 7 bis 9, welche dem ersten Zylinder (4) und dem zweiten Zylinder (5) zugeordnet ist.

13. Druckmaschine (1),
**gekennzeichnet durch**
ein Druckwerk (2) gemäß einem der Ansprüche 10 oder 11 und/oder eine Druckwerksgruppe gemäß Anspruch 12.

14. Druckmaschine (1) mit wenigstens einem ersten Zylinder (4) und einem zweiten Zylinder (5), welcher vom ersten Zylinder (4) mechanisch entkoppelt ist,
**gekennzeichnet durch**
eine Kompensationseinrichtung (9) gemäß einem der Ansprüche 1 bis 6 und/oder eine Regelungsvorrichtung gemäß einem der Ansprüche 7 bis 9, welche dem ersten Zylinder (4) und dem zweiten Zylinder (5) zugeordnet ist.

15. Druckmaschine (1) mit wenigstens einem ersten Zylinder (4),
**gekennzeichnet durch**
eine Kompensationseinrichtung (9) gemäß einem der Ansprüche 1 bis 6 und/oder eine Regelungsvorrichtung gemäß einem der Ansprüche 7 bis 9, welche dem ersten Zylinder (4) zugeordnet ist.

16. Kompensationsverfahren für Schwingungen einer Winkelgröße in einer bedruckstoffverarbeitenden Maschine (1), durch Einwirkung auf die Winkelgröße mit einem Aktuator (6) derart, dass Schwingungen der Winkelgröße verringert werden, wobei ein für den Winkelgrößenverlauf repräsentatives Signal bestimmt und zur Erzeugung eines Ausgangssignals für den Aktuator (6) in einer Kompensationseinrichtung (9) verarbeitet wird,
**dadurch gekennzeichnet,**
**dass** das Ausgangssignal der Kompensationseinrichtung (9) durch Wirkung wenigstens eines Filters in Form einer Übertragungsfunktion oder einer Summe von Übertragungsfunktionen, deren Frequenzparameter den zu kompensierenden Schwingungsfrequenzen entsprechen, an wenigstens einer der zu kompensierenden diskreten Frequenz auf das repräsentative Signal gewonnen wird, wobei die Übertragungsfunktion für jede der zu kompensierenden Frequenzen harmonisch ist und jeweils im Z-Bereich oder im S-Bereich dargestellt ist.

17. Regelungsverfahren für eine Winkelgröße in einer bedruckstoffverarbeitenden Maschine (1) durch Einwirkung auf die Winkelgröße mit einem Aktuator derart, dass Differenzen zwischen Istwerten und Sollwerten der Winkelgröße verringert werden,
**gekennzeichnet durch**
eine Kompensation für Schwingungen der Winkelgröße mit einem Kompensationsverfahren gemäß Anspruch 16.

**Claims**

1. A compensation device (9) for vibrations of an angle variable in a printing material processing machine (1) having an associated actuator (6) for affecting the angle variable, wherein the compensation device (9) is supplied a representative signal representative of the angle variable behavior, and the compensation device (9) generates an output signal for the actuator (6), **characterized in that** the compensation device (9) comprises at least one filter (13) in the form of a transfer function or a sum of transfer functions whose frequency parameters correspond to the vibration frequencies to be compensated, through whose effect the output signal of the compensation device (9) is obtained at at least one of the discrete frequencies to be compensated from the representative signal, wherein the transfer function for each of the frequencies to be compensated is harmonic and is represented in the Z range or in the S range.

2. The compensation device (9) for vibrations of an angle variable in a printing material processing machine (1) in accordance with claim 1, **characterized in that** the angle variable is an angle of rotation of a cylinder (4, 5) or an angle of rotation difference between a first cylinder (4) and a second cylinder (5).

3. The compensation device (9) for vibrations of an angle variable in a printing material processing machine (1) in accordance with claim 1, **characterized in that** the transfer function is a cosine transfer function or a sine transfer function or a weighted sum of a cosine transfer function and a sine transfer function.

4. The compensation device (9) for vibrations of an angle variable in a printing material processing machine (1) in accordance with one of the preceding claims, **characterized in that** the representative signal for the angle variable behavior is a time series having a signal train defined at certain points in time.

5. The compensation device (9) for vibrations of an angle variable in a printing material processing machine (1) in accordance with one of the preceding claims, **characterized in that** said compensation device (9) comprises a processor, wherein a program is executed in the processor, which has at least one section in which the output signal is obtained from the representative signal as a function of the transfer function on the representative signal.

6. The compensation device (9) for vibrations of an angle variable on a printing material processing machine (1) in accordance with of the preceding claims, **characterized in that** the compensation device (9) comprises at least one linear phase shift element (12) upstream or downstream from the filter (13) or contained within the filter (13).

7. A regulating device for an angle variable in a printing material processing machine (1) having an angle variable transducer, a regulating element (8), an actuator (6) affecting the angle variable, **characterized in that** the regulating device comprises a compensation device (9) for vibrations of the angle variable in accordance with one of the preceding claims, wherein the output signal of the compensation device (9) is superimposed on the output signal of the regulating element (8).

8. The regulating device for an angle variable in a printing material processing machine (1) in accordance with claim 7, **characterized in that** the representative signal represents the value of the angle variable or the value of the change in the angle variable or the value of the acceleration in the angle variable.

9. The regulating device for an angle variable in a printing material processing machine (1) in accordance with claim 7 or claim 8, **characterized in that** the regulating element (8) has an input for actual values of the representative signal of the angle variable and an input for setpoints of the representative signal of the angle variable.

10. A printing unit (2) in a printing material processing machine (1) comprising at least one cylinder (4), **characterized in that** a compensation device (9) in accordance with one of the claims 1 to 6 and/or a regulating device in accordance with one of the claims 7 to 9, which is associated with the cylinder (4).

11. The printing unit (2) in a printing material processing machine (1) comprising at least a first cylinder (4) and a second cylinder (5), **characterized in that** a compensation device (9) in accordance with one of the claims 1 to 6 and/or a regulating device in accordance with one of the claims 7 to 9, which is associated with the first cylinder (4) and the second cylinder (5).

12. A printing unit group in a printing material processing machine comprising at least a first cylinder (4) in a first printing unit (2) and a second cylinder (5) in a second printing unit (2), **characterized by** a compensation device (9) in accordance with one of the claims 1 to 6 and/or a regulating device in accordance with one of the claims 7 to 9, which is associated with the first cylinder (4) and the second cylinder (5).

13. A printing press (1), **characterized by** a printing unit (2) in accordance with one of the claims 10 or 11 and/or a printing unit group in accordance with claim 12.

14. The printing press (1) comprising at least one first cylinder (4) and a second cylinder (5), which is mechanically separated from the first cylinder (4), **characterized by** a compensation device (9) in accordance with one of the claims 1 to 6 and a regulating device in accordance with one of the claims 7 to 9, which is associated with the first cylinder (4) and the second cylinder (5).

15. The printing press (1) comprising at least one first cylinder (4), **characterized by** a compensation device (9) in accordance with one of the claims 1 to 6 and/or a regulating device in accordance with one of the claims 7 to 9, which is associated with the first cylinder (4).

16. A compensation method for vibrations of an angle variable in a printing material processing machine (1) by affecting the angle variable using an actuator (6) in such a way that the vibrations of the angle variable are reduced, wherein a representative signal representative of the angle variable behavior is determined and processed for generating an output signal for the actuator (6) in a compensation device (9), **characterized in that** the output signal of the compensation device (9) is obtained through the effect of at least one filter in the form of a transfer function or a sum of transfer functions, whose frequency parameters correspond to the vibration frequencies to be compensated, at at least one of the discrete frequencies to be compensated on the representative signal, wherein the transfer function for each of the frequencies to be compensated is harmonic and is represented in the Z range or in the S range.

17. A regulating method for an angle variable in a printing material processing machine (1) by affecting the angle variable by an actuator in such a way that differences between actual values and setpoints of the angle variable are reduced, **characterized by** a compensation for vibrations of the angle variable by a compensation method in accordance with claim 16.

## Revendications

1. Dispositif de compensation (9) pour des oscillations d'une grandeur angulaire dans une machine de traitement de matériau imprimé (1) avec un activateur associé (6) agissant sur la grandeur angulaire, le dispositif de compensation (9) recevant un signal représentatif de l'évolution de grandeur angulaire et le dispositif de compensation (9) génère un signal de sortie pour l'activateur (6), **caractérisé en ce que** le dispositif de compensation (9) présente au moins un filtre (13) sous forme d'une fonction de transmission ou d'une somme de fonctions de transmission dont les paramètres de fréquence correspondent aux fréquences d'oscillation à compenser, par l'action desquelles est tiré le signal de sortie du dispositif de compensation (9) à au moins une des fréquences de la fréquence discrète à compenser à partir du signal représentatif, la fonction de transmission étant harmonique pour chacune des fréquences à compenser et étant représentée respectivement dans la zone Z ou dans la zone S.

2. Dispositif de compensation (9) pour des oscillations d'une grandeur angulaire dans une machine de traitement de matériau imprimé (1) selon la revendication 1, **caractérisé en ce que** la grandeur angulaire est un angle de rotation d'un cylindre (4, 5) ou une différence d'angle de rotation d'un premier cylindre (4) ou d'un second cylindre (5).

3. Dispositif de compensation (9) pour des oscillations d'une grandeur angulaire dans une machine de traitement de matériau imprimé (1) selon la revendication 1, **caractérisé en ce que** la fonction de transmission est une fonction de transmission Cosinus ou une fonction de transmission Sinus ou une somme pondérée d'une fonction de transmission Cosinus et d'une fonction de transmission Sinus.

4. Dispositif de compensation (9) pour des oscillations d'une grandeur angulaire dans une machine de traitement de matériau imprimé (1) selon l'une des revendications précédentes, **caractérisé en ce que** le signal représentatif pour les grandeurs angulaires est une série temporelle, une suite de signaux définis à des points de temps.

5. Dispositif de compensation (9) pour des oscillations d'un grandeur angulaire dans une machine de traitement de matériau imprimé (1) selon l'une des revendications précédentes, **caractérisé en ce que** le dispositif de compensation (9) comprend un dispositif de calcul, le dispositif de calcul mettant en oeuvre un programme qui présente au moins une section dans laquelle le signal de sortie est tiré à partir du signal représentatif sous l'action de la fonction de transmission sur le signal représentatif.

6. Dispositif de compensation (9) pour des oscillations d'une grandeur angulaire dans une machine de traitement de matériau imprimé (1) selon l'une des revendications précédentes, **caractérisé en ce que** dans le dispositif de compensation (9) au moins un élément linéaire de décalage de phase (12) est placé avant ou après le filtre (13) ou est contenu dans le filtre (13).

7. Dispositif de réglage pour une grandeur angulaire dans une machine de traitement de matériau imprimé (1) avec un indicateur de grandeur angulaire, un élément de réglage (8) un actionneur (6) agissant sur la grandeur angulaire, **caractérisé en ce que** le dispositif de réglage présente un dispositif de compensation (9) pour des oscillations de la grandeur angulaire selon l'une des revendications précédentes, le signal de sortie du dispositif de compensation (9) étant superposé au signal de sortie de l'élément de réglage (8).

8. Dispositif de réglage pour une grandeur angulaire dans une machine de traitement de matériau imprimé (1) selon la revendication 7, **caractérisé en ce que** le signal représentatif représente la valeur de la grandeur angulaire ou la valeur de la modification de grandeur angulaire ou la valeur de l'accélération de grandeur angulaire.

**9.** Dispositif de réglage pour une grandeur angulaire dans une machine de traitement de matériau imprimé (1) selon la revendication 7 ou la revendication 8, **caractérisé en ce que** l'élément de réglage (8) présente une entrée pour des valeurs réelles du signal représentatif de la grandeur angulaire ou une entrée pour des valeurs de consigne du signal représentatif de la grandeur angulaire.

**10.** Organe d'impression (2) dans une machine de traitement de matériau imprimé (1) avec au moins un cylindre (4), **caractérisé par** un dispositif de compensation (9) selon l'une des revendications 1 à 6 et/ou un dispositif de réglage selon l'une des revendications 7 à 9, associé au cylindre (4).

**11.** Organe d'impression (2) dans une machine de traitement de matériau imprimé (1) avec au moins un premier cylindre (4) et un second cylindre (5), **caractérisé par** un dispositif de compensation (9) selon l'une des revendications 1 à 6 et/ou un dispositif de réglage selon l'une des revendications 7 à 9, associé au premier cylindre (4) et au second cylindre (5). (4).

**12.** Groupe d'organes d'impression dans une machine de traitement de matériau imprimé avec un premier cylindre (4) dans une premier organe d'impression (2) et un second cylindre (5) dans un second organe d'impression (2) **caractérisé par** un dispositif de compensation (9) selon l'une des revendications 1 à 6 et/ou un dispositif de réglage selon l'une des revendications 7 à 9, associé au premier cylindre (4) et au second cylindre (5).

**13.** Machine d'impression (1) **caractérisée par** un organe d'impression (2) selon l'une des revendications 10 ou 11 et/ou un groupe d'organes d'impression selon la revendication 12.

**14.** Machine d'impression (1) avec au moins un premier cylindre (4) et un second cylindre (5) qui est découplé mécaniquement du premier cylindre (4), **caractérisé par** un dispositif de compensation (9) selon l'une des revendications 1 à 6 et/ou un dispositif de réglage selon l'une des revendications 7 à 9, associé au premier cylindre (4) et au second cylindre (5). (4).

**15.** Machine d'impression (1) avec au moins un premier cylindre (4) **caractérisé par** un dispositif de compensation (9) selon l'une des revendications 1 à 6 et/ou un dispositif de réglage selon l'une des revendications 7 à 9, associé au premier cylindre (4) .

**16.** Procédé de compensation pour des oscillations d'une grandeur angulaire dans une machine de traitement de matériau imprime (1) par action sur la grandeur angulaire avec un activateur (6) de manière à diminuer des oscillations de la grandeur angulaire un signal représentatif de l'évolution des grandeurs angulaires étant défini et traité pour la génération d'un signal de sortie pour l'actionneur (6) dans le dispositif de compensation (9), **caractérisé en ce que** le signal de sortie du dispositif de compensation (9) est gagné par action d'au moins un filtre sous forme d'une fonction de transmission ou d'une somme de fonctions de transmission dont les paramètres de fréquence correspondent aux fréquences d'oscillation à compenser, à au moins une des fréquences de la fréquence discrète à compenser à partir du signal représentatif, la fonction de transmission étant harmonique pour chacune des fréquences à compenser et étant représentée respectivement dans la zone Z ou dans la zone S.

**17.** Procédé de réglage pour une grandeur angulaire dans une machine de traitement de matériau imprimé (1) par action sur la grandeur angulaire avec un activateur de sorte que des différences entre les valeurs réelles et de consigne de la grandeur angulaire soient diminuées, **caractérisé par** une compensation des oscillations de la grandeur angulaire avec un procédé de compensation selon la revendication 16.

Fig.1

Fig.2

Fig.3

Fig.4

Fig.5

Fig.6

Fig.7

Fig.8

Fig.9

Fig.10

**EP 1 355 211 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19740153 A1
- EP 0882588 A1
- EP 0469617 A1
- US 5369348 A
- EP 1202147 A
- DE 10149525 A1